# EUROPEAN PATENT APPLICATION

(11) **EP 4 571 981 A1**
(43) Date of publication of application: **18.06.2025**
(21) Application number: 24753568.5
(22) Date of filing: 05.02.2024
(51) Int. Cl.: H01M 50/289, H01M 10/60, H01M 10/658, H01M 50/204

(54) **CELL STACK ASSEMBLY AND BATTERY PACK COMPRISING SAME**

(30) Priority: 07.02.2023 KR 20230016354
(71) Applicant: LG Energy Solution, Ltd., Seoul 07335 (KR)
(72) Inventor: SON, Hong Se, Daejeon 34122 (KR); LEE, Hyoung Suk, Daejeon 34122 (KR); JANG, Keun Sang, Daejeon 34122 (KR); LEE, Gi Hwan, Daejeon 34122 (KR); KIM, Min Gu, Daejeon 34122 (KR)
(74) Representative: Plasseraud IP
(86) International application number: PCT/KR2024/001634
(87) International publication number: WO 2024/167239

(57) **Abstract**

The present technology relates to a cell stack assembly and a battery pack including the same, the cell stack assembly of the present disclosure includes a cell stack having a plurality of battery cells stacked with electrode leads derived from one or both sides; and a separating member configured to contact a first side surface of at least one battery cell of the cell stack, wherein the separating member including a hollow part therein and a protrusion part on each of both side surfaces.

## Description

### [Cross-Reference to Related Applications]

The present application is a national phase entry under of International Application No. , filed on , which claims priority from Korean Patent Application No. 10-2023-0016354, filed on February 07, 2023, all of which are incorporated herein by reference.

### [Technical Field]

The present disclosure relates to a cell stack assembly and a battery pack including the same. The cell stack assembly of the present disclosure includes a separating member including a hollow interior and a protrusion part on each of both sides. The battery pack of the present disclosure, including the cell stack assembly, is further characterized in that the separating members applied to each cell stack assembly inhibit the movement of heat in various forms.

### [Background Art]

The types of secondary batteries that are currently widely used include lithium-ion batteries, lithium polymer batteries, nickel-cadmium batteries, nickel-hydrogen batteries, nickel-zinc batteries, etc. The operating voltage of such unit secondary battery cells, in other words, unit battery cells, is about 2.5V to 4.5V. Therefore, if a higher output voltage than this is required, a plurality of such battery cells may be connected in series to form a battery pack. In addition, a battery pack may be configured by connecting a plurality of battery cells in parallel according to a charge and discharge capacity required for the battery pack. Accordingly, the number of battery cells included in the battery pack may be varied depending on the required output voltage or charge and discharge capacity.

When constructing a battery pack by connecting a plurality of battery cells in series/parallel, it is general to first construct a battery module comprising at least one battery cell, and to construct a battery pack by adding other components using such at least one battery module.

A conventional battery module generally includes at least one cell stack comprising battery cells and a housing structure made of a metal material in a box form accommodating such at least one cell stack, in other words, a module frame, etc.

Further, in order to solve the problem that the energy density of the entire battery pack is reduced due to the weight or volume, and the like of the module frame itself, and the weight of the entire battery pack is increased, a cell stack assembly excluding the module frame composition that wraps and protects the cell stack is utilized as a substitute for the conventional battery module.

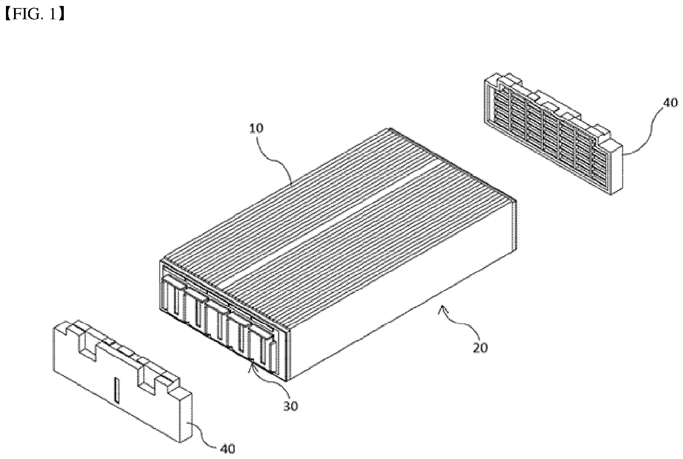

FIG. 1 is a perspective view of a conventional cell stack assembly 60, excluding the module frame composition. Referring to FIG. 1, a plurality of battery cells 10 are stacked in a row to form a cell stack 20 and coupled to the front and rear surfaces of the cell stack 20 is a busbar frame 30 that includes busbars that connect to electrode leads of each cell. There also shown is an end plate 40 coupling with the busbar frame 30 for protecting the electrode leads and busbars.

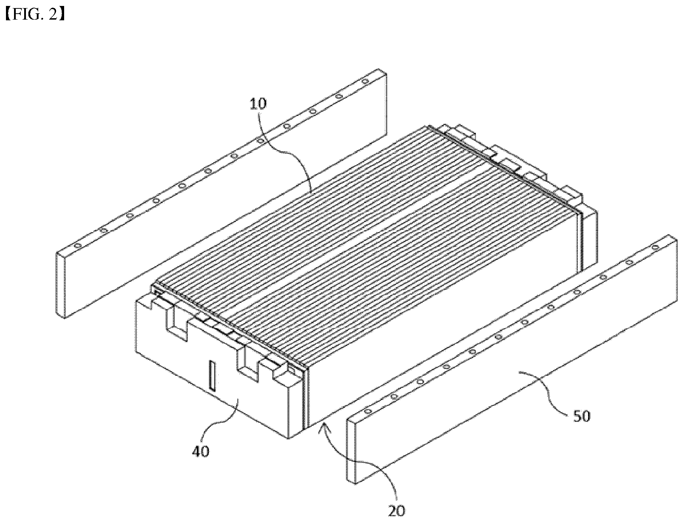

FIG. 2 provides a supporting beam 50 for supporting and protecting the cell stacks 20 in the cell stack assembly 60 of FIG. 1. Referring to FIG. 2, the supporting beams 50 are configured to support each cell stack 20 on both sides of the cell stack 20 while simultaneously protecting it from external impact.

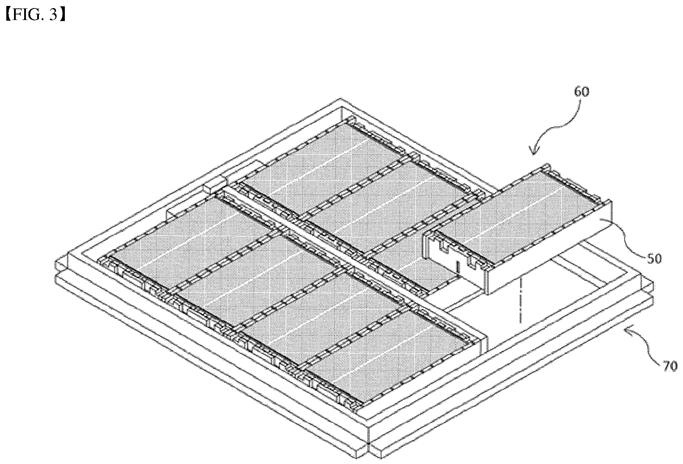

FIG. 3 illustrates a pack case 70 included in a conventional battery pack in which the cell stack assembly 60 of FIG. 2 is accommodated.

When a cell stack assembly 60 included with a supporting beam 50 is accommodated in a pack case 70 of the same structure as shown in FIG. 3, the supporting beam 50 may sufficiently serve to separate and protect a neighboring pair of cell stacks 20.

However, the supporting beam 50 of each cell stack assembly 60 is in good heat transfer with the supporting beam 50 of the other neighboring cell stack assembly 60, such that if a thermal runaway occurs in one cell stack 20, there is no way to prevent the transfer of high temperature heat to the other cell stack 20.

Moreover, because each cell included within the cell stack assembly 60 is stacked under pressure in contact with each other to form a single cell stack 20, there is no way to prevent the transfer of high temperature heat to the other cells if a thermal runaway occurs in any one cell within the cell stack assembly 60.

### [Disclosure]

### [Technical Problem]

Therefore, it is an object of the present disclosure to provide a cell stack assembly having a structure capable of suppressing the movement of heat in various forms, and a battery pack including the same.

Further, it is an object of the present disclosure to provide a cell stack assembly and a battery pack comprising the same which is lightweight while applying a separating member which suppresses the movement of heat.

Other objects and advantages of the present disclosure will be understood from the following description, which will become more apparent from the embodiments of the present disclosure, and it will be easily understood that the objects and advantages of the present disclosure may be realized by the means and combinations thereof disclosed in the claims of the patent.

### [Technical Solution]

According to the present disclosure, provide a cell stack assembly comprising: a cell stack having a plurality of battery cells stacked with electrode leads derived from one or both sides; and a separating member configured to contact a first side surface of at least one battery cell of the cell stack, wherein the separating member comprising a hollow part therein and a protrusion part on each of both side surfaces.

At least one of the outer and inner surfaces of the separating member may be coated with a metal thin film.

The protrusion parts may comprise a pattern of any one of a dot pattern, a stripe pattern, a grid pattern, and a honeycomb pattern.

The separating member may comprise a first supporting part and a second supporting part connecting the top and bottom of both side surfaces comprising the protrusion part, respectively, wherein the thickness of the first supporting part and the second supporting part may increase towards the edges.

The separating member may comprise a material of any one of glass and stainless steel.

The separating members may be attached to both side surfaces of the cell stack, respectively.

According to the present disclosure, provide a battery pack comprising a pack case accommodating the cell stack assembly, wherein the pack case includes: a base plate supporting a lower portion of the cell stack assembly; and side walls coupling to a rim of the base plate to support lateral portions of the cell stack assembly.

At least one of the outer surface and the inner surface of the separating member may be coated with a metal thin film.

The protrusion part may comprise a pattern of any one of a dot pattern, a stripe pattern, a grid pattern, and a honeycomb pattern.

The separating member may comprise a first supporting part and a second supporting part connecting the top and bottom of both side surfaces comprising the protrusion part, respectively, wherein the thickness of the first supporting part and the second supporting part may increase towards the edges.

The separating member may comprise a material of any one of glass and stainless steel.

At least one of the outer surface and the inner surface of the separating member may be coated with a metal thin film.

The separating member may be attached to each of both sides of the cell stack.

The pack case may further include a separation wall coupling with the base plate to be interposed between each of the cell stack assemblies such that any pair of neighboring disposed cell stack assemblies are separated.

### [Advantageous Effects]

According to the present disclosure, the heat safety of cell stack assembly and battery pack can be improved.

Further, according to the present disclosure, the cell stack assembly and battery pack can be lightweight to improve energy density.

### [Brief Description of the Drawings]

FIG. 1 illustrates a conventional cell stack assembly.
FIG. 2 illustrates a conventional cell stack assembly provided with a supporting beam.
FIG. 3 illustrates a conventional battery pack.
FIG. 4 is a perspective view of a cell stack assembly according to a first embodiment of the present disclosure.
FIG. 5 illustrates another embodiment of a cell stack assembly applied with a module frame wrapping around the cell stack.
FIG. 6 is a perspective view of a separating member included in a cell stack assembly according to a first embodiment of the present disclosure.
FIG. 7 is a longitudinal perspective view of FIG. 6.
FIG. 8 is a cross-sectional perspective view of FIG. 6.
FIG. 9 is an enlarged view of the top and bottom of the separating member of FIG. 7, respectively.
FIG. 10 illustrates heat transferred through a separating member in which a metal thin film is coated on an outer surface.
FIG. 11 illustrates heat transferred through a separating member in which a metal thin film is coated on an inner surface.
FIG. 12 is a perspective view of a pack case included in a battery pack in which a cell stack assembly according to a first embodiment of the present disclosure is accommodated.
FIG. 13 is a longitudinal perspective view of a separating member included in a cell stack assembly according to a second embodiment of the present disclosure.
FIG. 14 is a cross-sectional perspective view of a separating member included in a cell stack assembly according to a second embodiment of the present disclosure.
FIG. 15 is an enlarged view of the top and bottom of the separating member of FIG. 13, respectively.
FIG. 16 is a perspective view of a cell stack assembly according to a third embodiment of the present disclosure.
FIG. 17 is a perspective view of a pack case included in a battery pack in which a cell stack assembly according to a third embodiment of the present disclosure is accommodated.
FIG. 18 is a perspective view of a separating member included in a cell stack assembly according to a fourth embodiment of the present disclosure.
FIG. 19 is a perspective view of a separating member included in a cell stack assembly according to a fifth embodiment of the present disclosure.
FIG. 20 is a perspective view of a separating member included in a cell stack assembly according to a sixth embodiment of the present disclosure.
FIG. 21 is a perspective view of a separating member included in a cell stack assembly according to a seventh embodiment of the present disclosure.

### [Detailed Description]

The present disclosure will now be described in detail with reference to the accompanying drawings, which illustrate preferred embodiments of the present disclosure. It is hereby understood that the terms and words used in this specification and claims are not to be construed in their ordinary or dictionary sense, but are to be interpreted with a meaning and concept consistent with the technical idea of the present disclosure, based on the principle that the inventor may define the concept of a term as he or she considers appropriate to best describe the disclosure.

However, it should be understood that the present disclosure is not limited to the specific embodiments, and includes all modifications, equivalents, or alternatives within the spirit and technical scope of the present disclosure.

In addition, in describing the present disclosure, specific descriptions of related disclosed configurations or functions are omitted where it is considered that such detailed description would obscure the subject matter of the present disclosure.

The present disclosure is shown in embodiment to more fully explain the present disclosure to those of ordinary skill in the art, and therefore, the shapes and sizes of the components in the drawings may be exaggerated, omitted, or shown schematically for clarity. Accordingly, the size or proportions of each component are not necessarily indicative of its actual size or proportions.

The present disclosure relates to a cell stack assembly 100 and a battery pack comprising the same. The cell stack assembly 100 of the present disclosure includes a separating member 140 that includes a hollow inside and includes a protrusion part 141 on each of both side surfaces. The battery pack of the present disclosure including the cell stack assembly 100 is further characterized in that the movement of heat H in various forms is inhibited using the separating member 140 applied to each cell stack assembly 100.

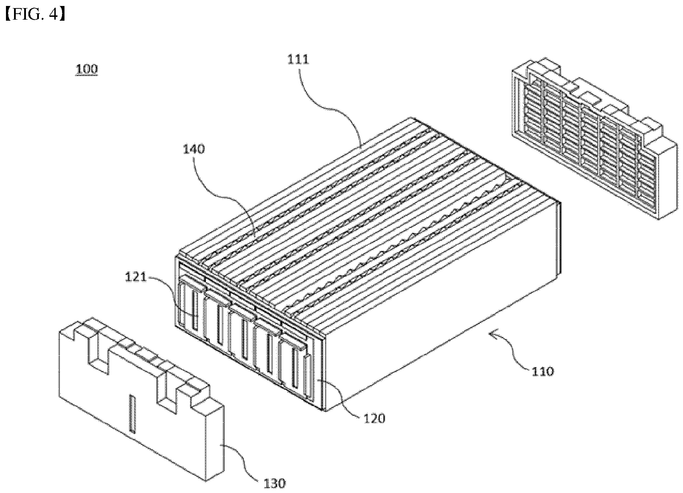

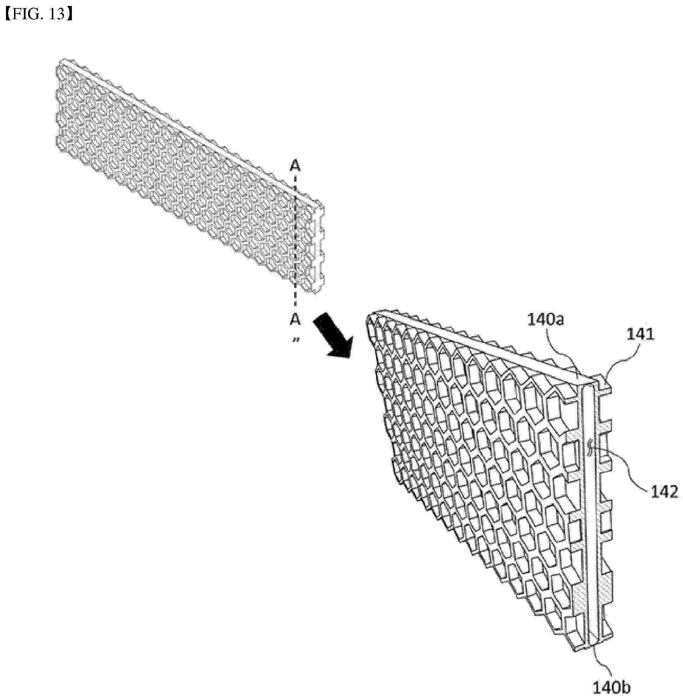

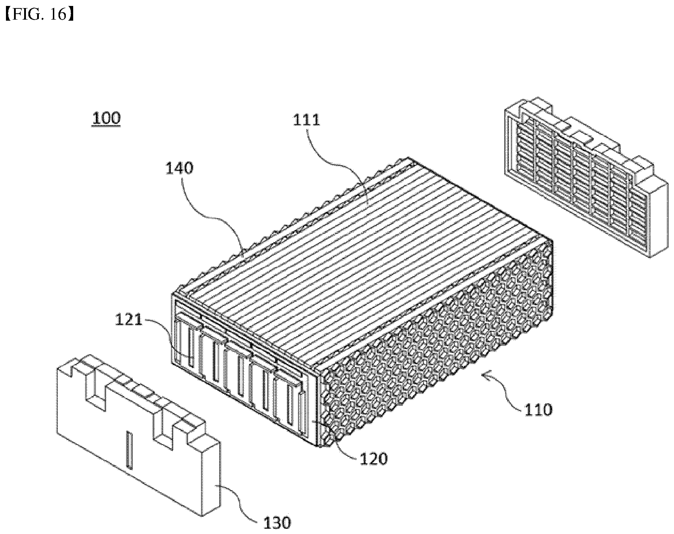

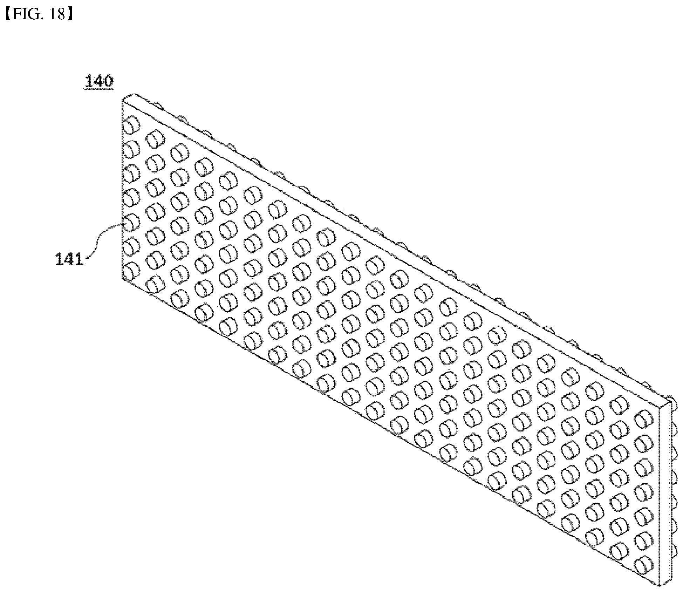

FIGS. 4 to FIG. 12 relate to a cell stack assembly 100 and a battery pack comprising the same according to a first embodiment of the present disclosure, FIGS. 13 to FIG. 15 relate to a cell stack assembly 100 according to a second embodiment, FIGS. 16 to FIG. 17 relate to a cell stack assembly 100 and a battery pack comprising the same according to a third embodiment of the present disclosure, and FIGS. 18 to FIG. 21 relate to a cell stack assembly 100 according to a fourth to seventh embodiment of the present disclosure, respectively.

Hereinafter, with reference to each of these drawings, a cell stack assembly 100 and a battery pack according to various embodiments of the present disclosure will be described.

### (First embodiment)

### Cell stack assembly 100

FIG. 4 is a perspective view of a cell stack assembly 100 according to a first embodiment of the present disclosure.

The cell stack assembly 100 includes a cell stack 110 and a separating member 140. More specifically, the cell stack assembly 100 includes a cell stack 110 stacked in one direction with a plurality of battery cells 111 having electrode leads (not shown) derived from one or both sides as shown in FIG. 4, and a busbar 121 in electrically coupling with each electrode lead of the cell stack 110, a busbar frame 120 coupled to each front and rear surfaces of the cell stack 110, an end plate 130 coupled to the busbar frame 120 to cover the busbar 121, and a separating member 140 configured to contact one side of at least one battery cell 111 of the cell stack 110.

The cell stack assembly 100 of the present disclosure may be a structure in which the inner cells 111 and separating members 140 are exposed to the outside, as shown in FIG. 4, but may also be a structure in which the cells 111 and separating members 140 are sealed and not exposed to the outside.

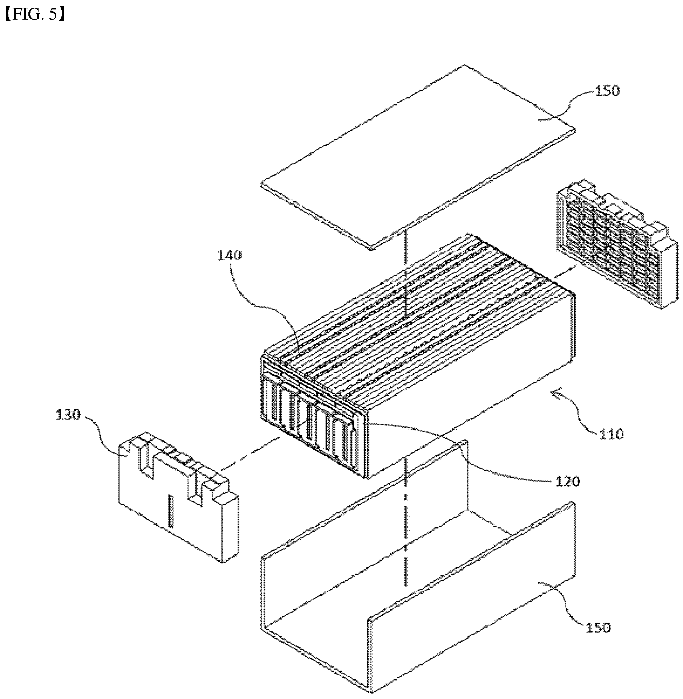

FIG. 5 illustrates a cell stack assembly 100 according to another embodiment of the present disclosure applied with a module frame 150 surrounding the cell stack 110.

The module frame 150 wraps around and covers the perimeter of the cell stack 110, and each cell 111 is protected from the outside by coupling to the module frame 150 or end plate 130.

The separating members 140 are interposed between any one of the pair of cells 111 among the plurality of cells 111 included in the cell stack 110, as shown in FIG. 4.

The separating members 140 interposed between the cells 111 as described above serve to block the movement of heat H from cell to cell by separating between the cells 111. In other words, the separating members 140 serve to prevent the transfer of the heat H to other neighboring cells 111 when one of the cells 111 undergoes a thermal runaway and emits high temperatures of heat H.

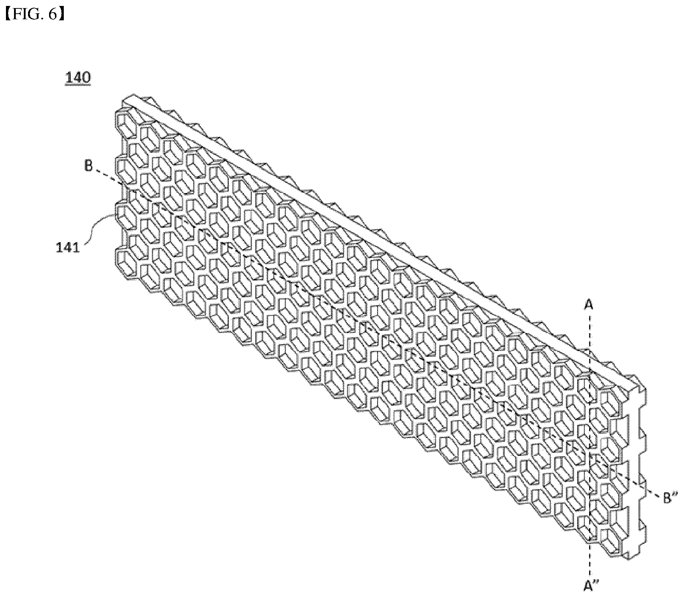

FIG. 6 is a perspective view of a separating member 140 included in the cell stack assembly 100 according to a first embodiment of the present disclosure.

The separating member 140 may be glass, which has a low thermal conductivity, or stainless steel, but any material may be used if it is safe for high heat H.

The separating member 140 of the present disclosure is characterized in that it effectively blocks the movement of heat H by various means, including conduction, convection, and radiation.

The separating member 140 includes protrusion parts 141 projecting in a certain pattern on both sides, as shown in FIG. 6.

The protrusion parts 141 have the effect of reducing the area in contact with the cell 111, thereby reducing the path for heat H to be transferred from the cell 111 to the separating member 140.

The separating member 140 also improves structural stability as the protrusion part 141 has a stable pattern form.

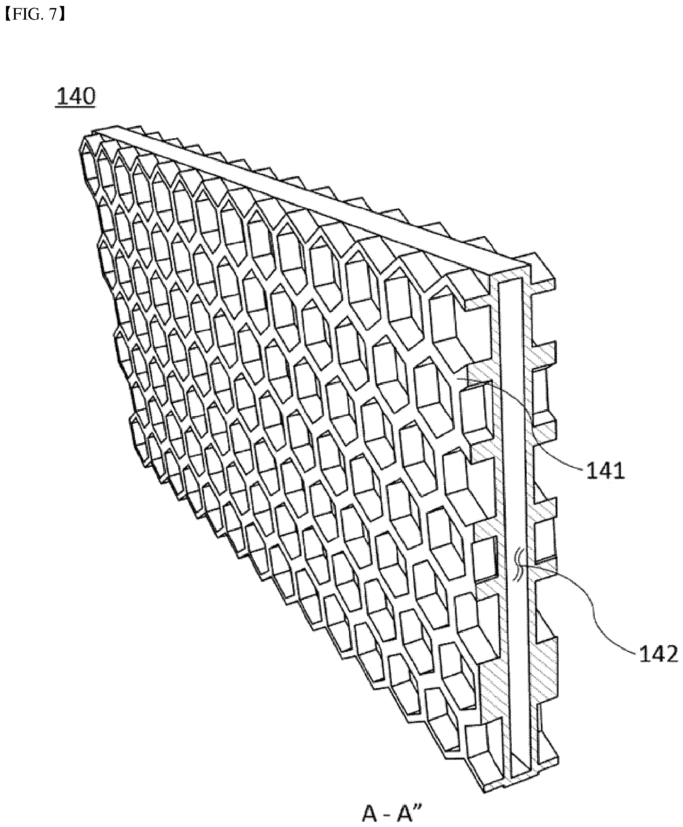

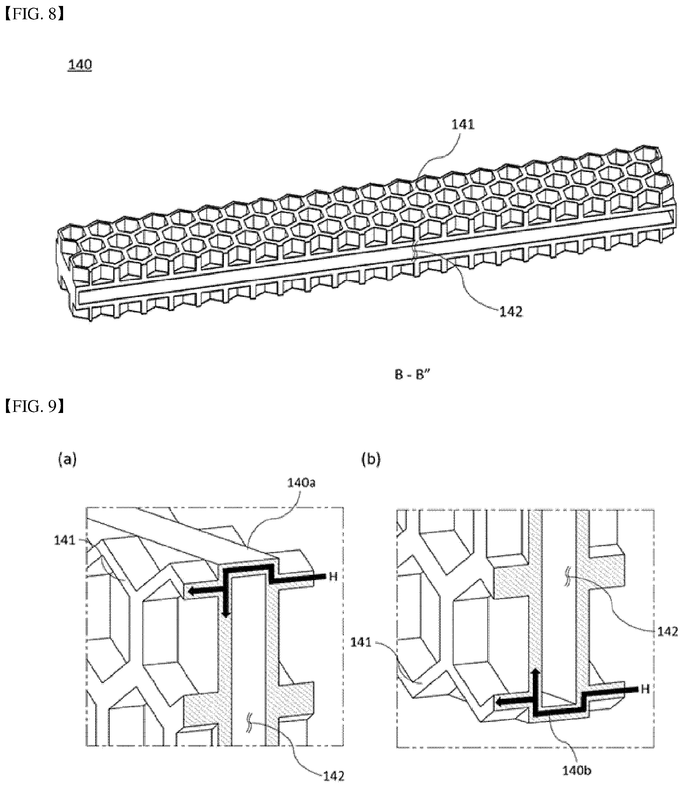

Fig. 7 and Fig. 8 are cross-sectional perspective views of the separating member 140 of FIG. 6.

Specifically, FIG. 7 is a cross-sectional view of A-A" of FIG. 6, and FIG. 8 is a cross-sectional view of B-B" of FIG. 6.

The separating member 140 is a hollow structure that is hollow inside as shown in FIG. 7 and FIG. 8. In other words, the separating member 140 includes a hollow part 142 inside.

The hollow part 142 of the separating member 140 is maintained in a vacuum.

Because of the hollow part 142 and the vacuum structure of the hollow part 142, the separating member 140 effectively blocks the movement of heat H in the form of conduction and convection inside the separating member 140.

The separating member 140 includes a first supporting part 140a and a second supporting part 140b connecting the top and bottom of the two side surfaces including the protrusion part 141, respectively, and a third supporting part and a fourth supporting part connecting the lateral portions of the two side surfaces, respectively.

FIG. 9 is an enlarged view of the top (FIG. 9(a)) and bottom (FIG. 9(b)), respectively, of the separating member 140 of FIG. 7 above.

Heat H transferred to one side of the separating member 140 moves in the form of conduction to the other side through the first supporting part 140a corresponding to the top and the second supporting part 140b corresponding to the bottom of the separating member 140, as shown in FIG. 9. Although not shown, the third supporting part and the fourth supporting part also become the only conduction pathways for heat H to move in the same manner as the first supporting part 140a and the second supporting part 140b.

The outer surface of said separating member 140 may be coated with a metal thin film capable of reflecting the radiant heat H. In other words, the metal thin film reflects the heat H moving in the form of radiation so that only a portion of the heat H is transferred to the separating member 140.

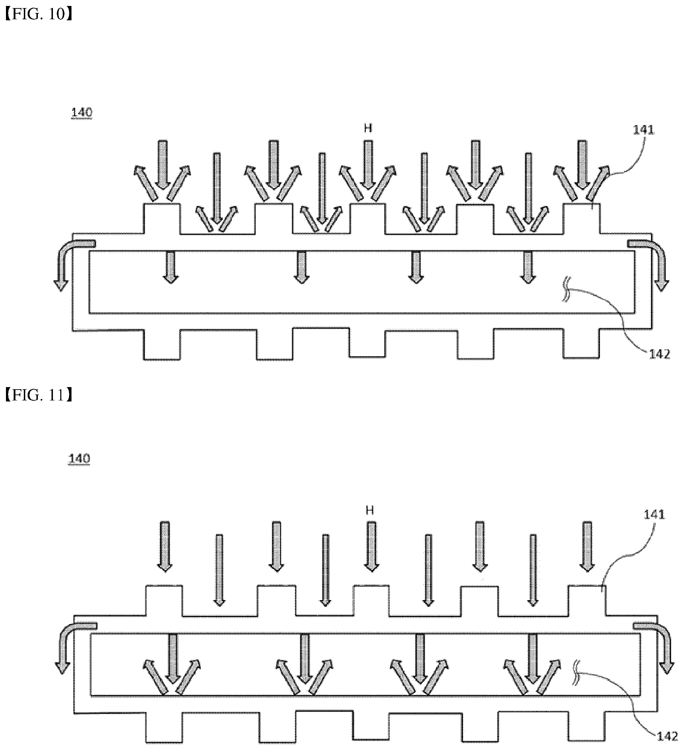

FIG. 10 schematically illustrates the transfer of heat (H) through a separating member 140 having a metal thin film coated on its outer surface.

According to FIG. 10, it can be noticed that the heat H moving toward the separating member 140 in the form of radiation is partially reflected from the surface of the separating member 140 and partially absorbed by the separating member 140.

The metal thin film may be coated not only on the outer surface of the separating member 140, but also on the inner surface where the hollow part 142 is located.

FIG. 11 schematically illustrates the transfer of heat (H) through a separating member (140) having a metal thin film coated on its inner surface.

According to FIG. 11, it can be noticed that the heat H moving in the form of radiation toward the separating member 140 is absorbed by the surface of the separating member 140, and the heat H radiating through the hollow part 142 is partially reflected through the metal thin film coated on the inner surface.

### Battery pack

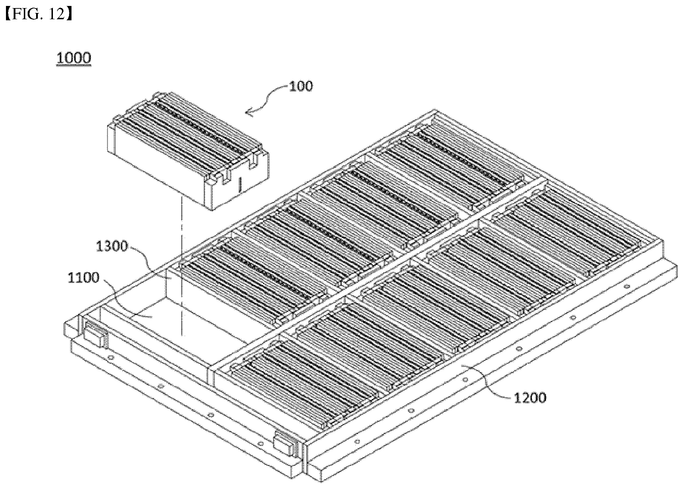

FIG. 12 is a perspective view of a pack case 1000 included in a battery pack in which a cell stack assembly 100 according to a first embodiment of the present disclosure is accommodated.

The pack case 1000 includes a base plate 1100 and a side wall 1200. Specifically, the pack case 1000 includes a base plate 1100 supporting a lower portion of the cell stack assembly 100 as shown in FIG. 12, and a side wall 1200 coupling to a rim of the base plate 1100 to support a lateral portion of the cell stack assembly 100.

The pack case 1000 further includes a plurality of separation walls 1300 coupled to the base plate 1100 to provide separation between a pair of neighboring cell stack assemblies 100.

The separation walls 1300 have the purpose of providing separation between each cell stack assembly 100 and blocking the movement of heat.

Since the battery pack has a separating member 140 applied to each of the accommodated cell stack assemblies 100, the battery pack has the effect of delaying the transfer of heat (H) to the entire cell stack assembly 100 in case of a thermal runaway phenomenon in any one of the cell stack assemblies 100.

### (Second embodiment)

### Cell stack assembly 100

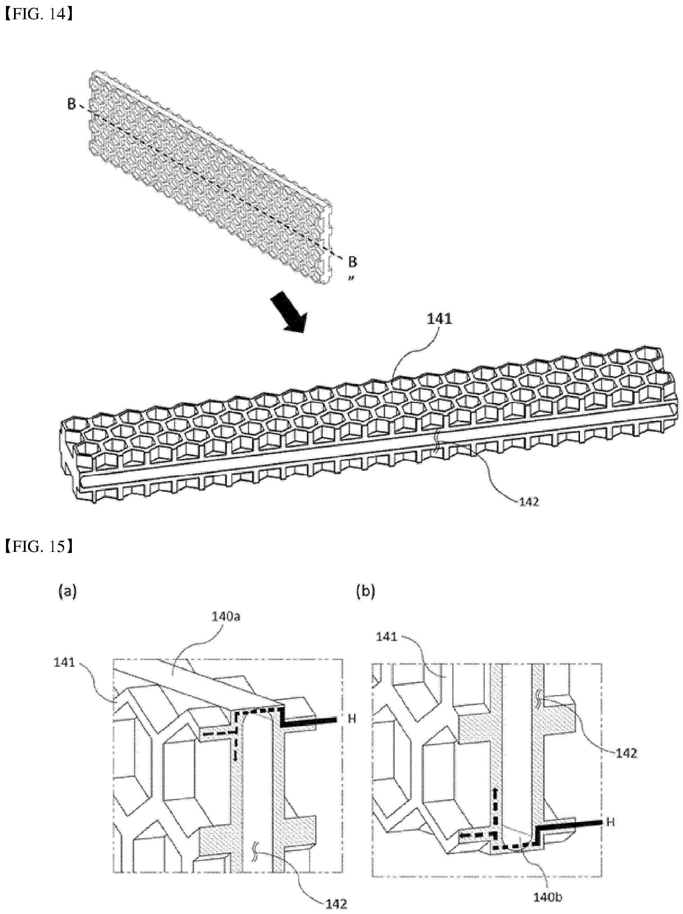

FIG. 13 and FIG. 14 are cross-sectional perspective views of a separating member 140 included in the cell stack assembly 100 according to a second embodiment.

In the separating member 140, the thickness of the first supporting part 140a, the second supporting part 140b, the third supporting part, and the fourth supporting part becomes thicker towards the edges and thinner towards the center; in other words, the thickness of the first to fourth supporting parts connecting both sides of the separating member 140 including the protrusion part 141 is thinner than the thickness of the first to fourth supporting parts of the separating member 140 of the cell stack assembly 100 according to the first embodiment. Accordingly, the movement of heat H through the first to fourth supporting parts may be limited, and in particular, the amount of heat H that moves through conduction may be significantly reduced.

FIG. 15 is an enlarged view of the top (FIG. 15(a)) and bottom (FIG. 15(b)) of the separating member 140 of FIG. 13, respectively.

Heat H transferred to one side of the separating member 140 moves in the form of conduction to the other side through the first supporting part 140a corresponding to the top and the second supporting part 140b corresponding to the bottom of the separating member 140, as shown in FIG. 15. Although not shown, the third supporting part and the fourth supporting part also become the only conduction pathways for the heat H to move in the same manner as the first supporting part 140a and the second supporting part 140b.

However, since the thickness of the first supporting part 140a and the second supporting part 140b connecting both sides of the separating member 140 as shown in FIG. 15 is reduced, the amount of heat H that moves may be reduced.

### (Third embodiment)

### Cell stack assembly 100

FIG. 16 is a perspective view of a cell stack assembly 100 according to a third embodiment of the present disclosure.

The cell stack assembly 100 includes a cell stack 110 and a separating member 140. More specifically, the cell stack assembly 100 includes a cell stack 110 stacked in one direction with a plurality of battery cells 111 having electrode leads (not shown) derived from one or both sides as shown in FIG. 16, and a busbar 121 in electrical connection with each electrode lead of the cell stack 110, a busbar frame 120 coupled to each of the front and rear surfaces of the cell stack 110, an end plate 130 coupled to the busbar frame 120 to cover the busbar 121, and a separating member 140 configured to contact a first surface of the outermost cell 111 on each side of the cell stack 110.

The cell stack assembly 100 of the present disclosure may be a structure in which the inner cells 111 and separating members 140 are exposed to the outside, as shown in FIG. 16, but may also be a structure in which the cells 111 and separating members 140 are sealed and not exposed to the outside.

The separating member 140 is configured to contact the outer surface of the outermost cell 111 on both sides of the cell stack 110, as shown in FIG. 16. At this time, the separating members 140 may be coupled to and fixed to the busbar frame 120.

As described above, the separating member 140 attached to the outermost cell 111 of the cell stack 110 serves to support both sides of the cell stack 110, and also serves to block the heat H inside the cell stack 110 from being released to the outside. In other words, when the cell stack 110 overheats and releases high temperature heat H, the separating member 140 serves to prevent the heat H from being transferred to other neighboring cell stacks 110.

### Battery pack

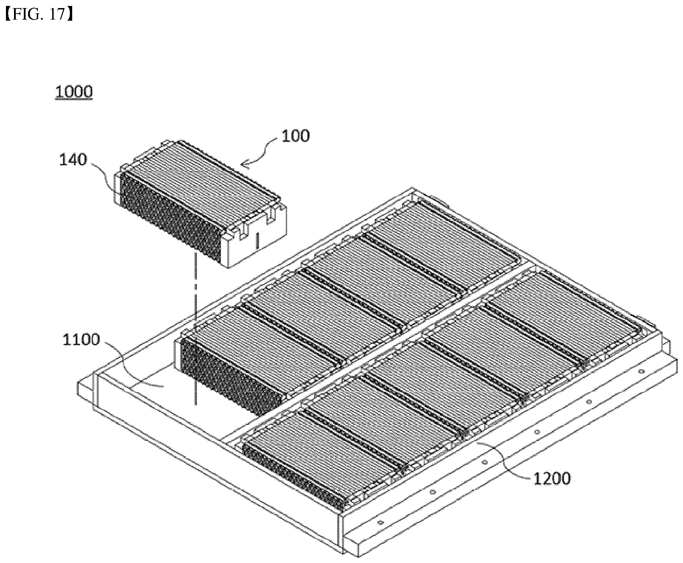

FIG. 17 is a perspective view of a pack case 1000 included in a battery pack in which a cell stack assembly 100 according to a third embodiment of the present disclosure is accommodated.

The pack case 1000 includes a base plate 1100 and a side wall 1200. Specifically, the pack case 1000 includes a base plate 1100 supporting a lower portion of the cell stack assembly 100 as shown in FIG. 17, and a side wall 1200 coupling to a rim of the base plate 1100 to support a lateral portion of the cell stack assembly 100.

In the pack case 1000, each pair of neighboring cell stacks 110 has a separating member 140 provided on both sides of each cell stack 110, in other words, there are two separating members 140 between the pair of cell stacks 110.

The separating members 140 provide separation between each cell stack 110 and prevent heat H from being transferred from one cell stack 110 to the other neighboring cell stack 110.

Since the battery pack has the separating member 140 applied to each of the cell stack assemblies 100 accommodated, the battery pack has the effect of delaying the transfer of heat (H) to the entire cell stack assembly 100 in the case of a thermal runaway phenomenon in any one of the cell stack assemblies 100.

### (Fourth embodiment)

### Cell stack assembly 100

FIG. 18 is a perspective view of a separating member 140 included in a cell stack assembly 100 according to a fourth embodiment of the present disclosure.

The separating member 140 of the present disclosure may be formed to have a protrusion part 141 having various patterns, such as a dot pattern as shown in FIG. 18.

### (Fifth embodiment)

### Cell stack assembly 100

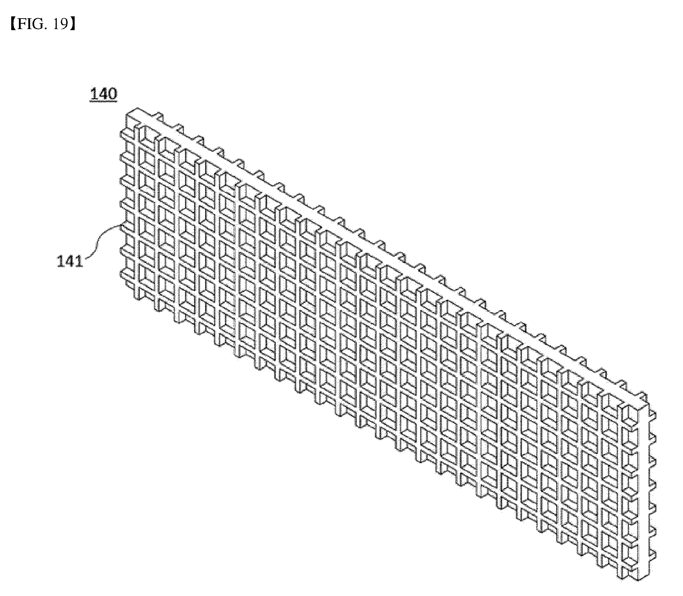

FIG. 19 is a perspective view of a separating member 140 included in a cell stack assembly 100 according to a fifth embodiment of the present disclosure.

The separating member 140 of the present disclosure may be formed to have protrusion parts 141 having various patterns, such as a grid pattern as shown in FIG. 19.

### (Sixth embodiment)

### Cell stack assembly 100

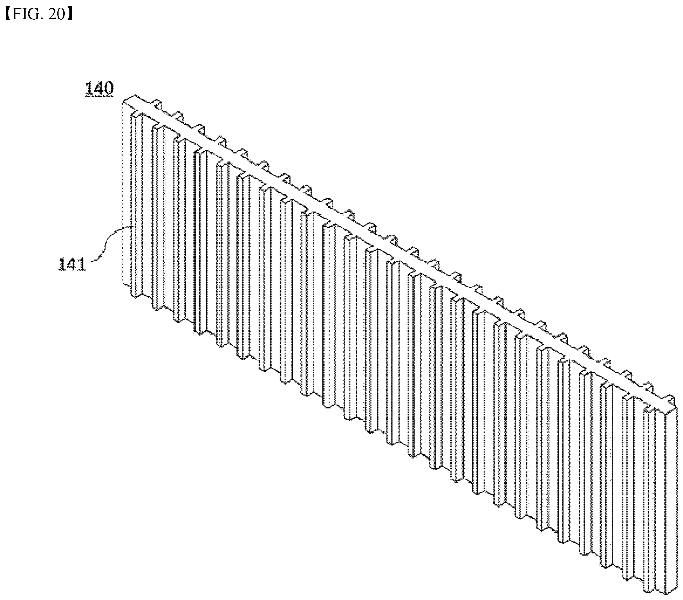

FIG. 20 is a perspective view of a separating member 140 included in a cell stack assembly 100 according to a sixth embodiment of the present disclosure.

The separating member 140 of the present disclosure may be formed to have protrusion parts 141 having various patterns, such as a striped pattern as shown in FIG. 20. In this case, the protrusion parts 141 are formed to extend along the height direction of the separating member 140 and to be spaced apart at predetermined intervals along the length direction of the separating member 140.

### (Seventh embodiment)

### Cell stack assembly 100

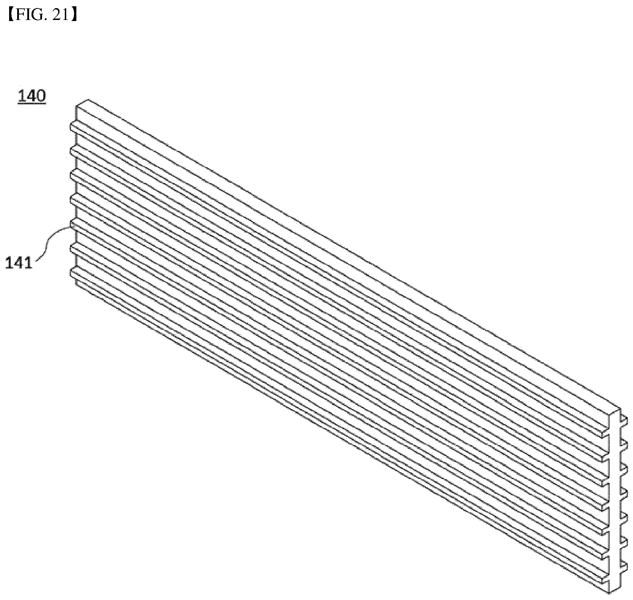

FIG. 21 is a perspective view of a separating member 140 included in a cell stack assembly 100 according to a seventh embodiment of the present disclosure.

The separating member 140 of the present disclosure may be formed to have protrusion parts 141 having various patterns, such as a striped pattern as shown in FIG. 21. In this case, the protrusion parts 141 are formed to extend along the length direction of the separating member 140 and to be spaced apart at predetermined intervals along the height direction of the separating member 140.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: (conventional art) battery cell
20: (conventional art) cell stack
30: (conventional art) busbar frame
40: (conventional art) end plate
50: (conventional art) supporting beam
60: (conventional art) cell stack assembly
70: (conventional art) pack case
100: cell stack assembly
110: cell stack
111: cell
120: busbar frame
121: busbar
130: end plate
140: separating member
140a: first supporting part
140b: second supporting part
141: protrusion part
142: hollow part
150: module frame
1000: pack case
1100: base plate
1200: side wall
1300: separation wall
H: heat

## Claims

1. A cell stack assembly, comprising:
a cell stack having a plurality of battery cells stacked with electrode leads derived from one or both sides; and
a separating member configured to contact a first side surface of at least one battery cell of the cell stack,
wherein the separating member comprising a hollow part therein and a protrusion part on each of both side surfaces.

2. The cell stack assembly of claim 1, wherein at least one of the outer and inner surfaces of the separating member are coated with a metal thin film.

3. The cell stack assembly of claim 1, wherein the protrusion parts comprise a pattern of any one of a dot pattern, a stripe pattern, a grid pattern, and a honeycomb pattern.

4. The cell stack assembly of claim 1, wherein the separating member comprises a first supporting part and a second supporting part connecting the top and bottom of both side surfaces comprising the protrusion part, respectively,
wherein the thickness of the first supporting part and the second supporting part may increases the edges.

5. The cell stack assembly of claim 1, wherein the separating member comprises a material of any one of glass and stainless steel.

6. The cell stack assembly of claim 1, wherein the separating members is attached to both side surfaces of the cell stack, respectively.

7. A battery pack, comprising:
a pack case accommodating the cell stack assembly of claim 1,
wherein the pack case, comprising:
a base plate supporting a lower portion of the cell stack assembly; and
side walls coupling to a rim of the base plate to support lateral portions of the cell stack assembly.

8. A battery pack of claim 7, wherein at least one of the outer surface and the inner surface of the separating member are coated with a metal thin film.

9. A battery pack of claim 7, wherein the protrusion part comprises a pattern of any one of a dot pattern, a stripe pattern, a grid pattern, and a honeycomb pattern.

10. A battery pack of claim 7, wherein the separating member comprises a first supporting part and a second supporting part connecting the top and bottom of both side surfaces comprising the protrusion part, respectively,
wherein the thickness of the first supporting part and the second supporting part increases towards the edges.

11. A battery pack of claim 7, wherein the separating member comprises a material of any one of glass and stainless steel.

12. A battery pack of claim 7, wherein at least one of the outer surface and the inner surface of the separating member are coated with a metal thin film.

13. A battery pack of claim 7, wherein the separating member is attached to each of both sides of the cell stack.

14. A battery pack of claim 7, wherein the pack case further comprises a separation wall coupling with the base plate to be interposed between each of the cell stack assemblies such that any pair of neighboring disposed cell stack assemblies are separated.
